# EUROPÄISCHE PATENTANMELDUNG

(11) **EP 0 908 260 A1**
(43) Veröffentlichungstag der Anmeldung: **14.04.1999**
(21) Anmeldenummer: 98109304.0
(22) Anmeldetag: 22.05.1998
(51) Int. Cl.: B23K 7/10, F23N 5/10, F23N 1/00

(54) **Vorrichtung zum Steuern der Gaszufuhr einer Gasverbrauchseinrichtung**

(30) Priorität: 11.10.1997 DE 19744770
(71) Anmelder: AGT Gas Technology GmbH, 57439 Attendorn (DE)
(72) Erfinder: Luke, Michael, 57413 Finnentrop (DE); Sömer, Heinz, 57368 Lennestadt (DE)
(74) Vertreter: COHAUSZ HANNIG DAWIDOWICZ & PARTNER

(57) **Zusammenfassung**

Die Erfindung betrifft eine Vorrichtung zum Steuern der Gaszufuhr einer Gasverbrauchseinrichtung, insbesondere eines Gasherdes, mit zwei in der Vorrichtung in Strömungsrichtung hintereinander in der Leitung angeordneten Absperrorganen (2,16), von denen eines als Absperrvorrichtung die Gaszufuhr nur absperrt oder vollständig freigibt und das andere als Steuervorrichtung die Durchflußmenge bestimmt. Die Ventilstellglieder (2,10) beider Absperrorgane (2,16) werden durch eine gemeinsame Stellspindel (3) betätigt und das Ventilstellglied (2) der Absperrvorrichtung liegt koaxial zur Spindelachse und das andere Ventilstellglied (10) der Steuervorrichtung (16) außerhalb der Spindelachse. Die Stellspindel (3) bewegt über mindestens eine Steuerkurve das Ventilstellglied (2) der Absperrvorrichtung axial.

## Beschreibung

Die Erfindung betrifft eine Vorrichtung zum Steuern der Gaszufuhr einer Gasverbrauchseinrichtung, insbesondere eines Gasherdes, mit zwei in der Vorrichtung in Strömungsrichtung hintereinander in der Leitung angeordneten Absperrorganen, von denen eines als Absperrvorrichtung die Gaszufuhr nur absperrt oder vollständig freigibt und das andere als Steuervorrichtung die Durchflußmenge bestimmt, wobei die Ventilstellglieder beider Absperrorgane durch eine gemeinsame Stellspindel betätigt werden und das Ventilstellglied der Absperrvorrichtung koaxial zur Spindelachse und das andere Ventilstellglied der Steuervorrichtung außerhalb der Spindelachse liegt.

Eine solche Vorrichtung ist aus der DE 3524440 bekannt. Darüber hinaus sind Gasventile bekannt, bei denen das Absperrventil ein Kükenventilstellglied ist. Das Kükenventilstellglied besteht aus einem drehbar gelagerten Kükenkegel und hat den Nachteil, daß dieses unter sehr hohem Aufwand erstellt werden muß, um die sehr feine und genaue Kegeloberfläche zu erreichen, die eine absolute Gasdichtheit nach außen und im Innern des Gasventils sicherstellen muß. Zudem muß jeder eingesetzte Kükenkegel außen an seiner Kegeloberfläche grundsätzlich mit hochtemperatursicherem Schmierfett versehen werden, um die Gleitfähigkeit des Kükenkegels auf Dauer zu erreichen. Diese unbedingt notwendigen Eigenschaften, die als Voraussetzung für ein gasdichtes Gasventil zugrunde gelegt werden müssen, sind aufwendig und teuer.

Aufgabe der Erfindung ist es, das Gasventil mit Schraubengetriebe mit zwei in der Vorrichtung hintereinanderliegenden Absperrorganen derart zu verbessern, daß beide Absperrorgane weiterhin mit einer gemeinsamen Spindelachse betätigt werden können, und das Absperrorgan für die Absperrung und vollständige Freigabe des Gasdurchflusses auf konstruktiv einfachere Art und Weise erfolgt.

Diese Aufgabe wird erfindungsgemäß dadurch gelöst, daß die Stellspindel über mindestens eine Steuerkurve das Ventilstellglied der Absperrvorrichtung axial bewegt.

Das zur Absperrung und vollständigen Freigabe benötigte, drehbar gelagerte Kükenventilstellglied ist durch einen Ventilkolben mit einem koaxial vorgelagerten Kurvenventil ersetzt, welches über einen Mitnehmer durch die Spindelachse verdrehbar ist, und dabei gleichzeitig eine Axialbewegung auf den Ventilkolben überträgt.

Vorteilhafte Ausgestaltungen der Erfindung sind in den Unteransprüchen aufgeführt.

Eine Ausführungsbeispiel der Erfindung ist in den Zeichnungen schematisch gezeigt und im folgenden näher beschrieben.

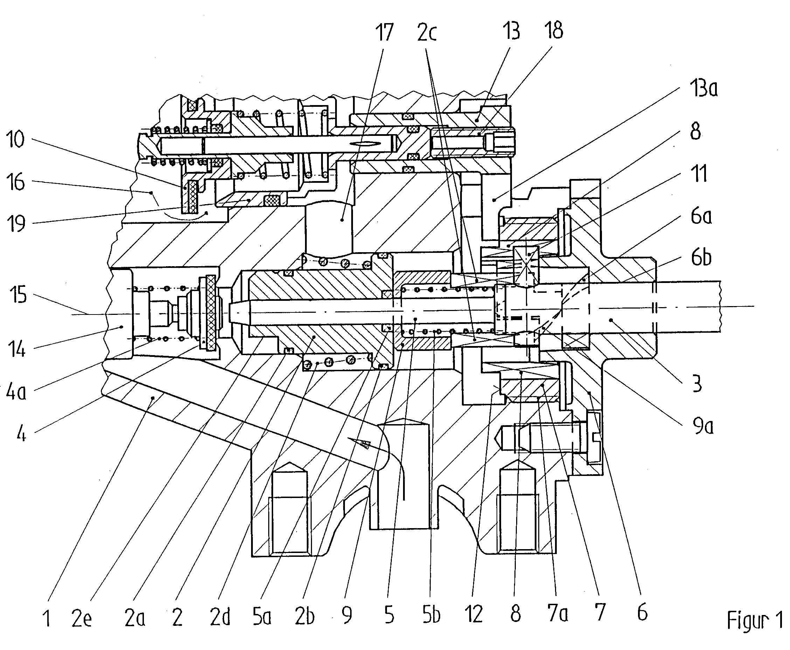

Es zeigen
- Fig. 1: einen Schnitt durch die erfindungsgemäße Vorrichtung mit einem Ventilkolbenstellglied in geschlossener Ventilstellung,

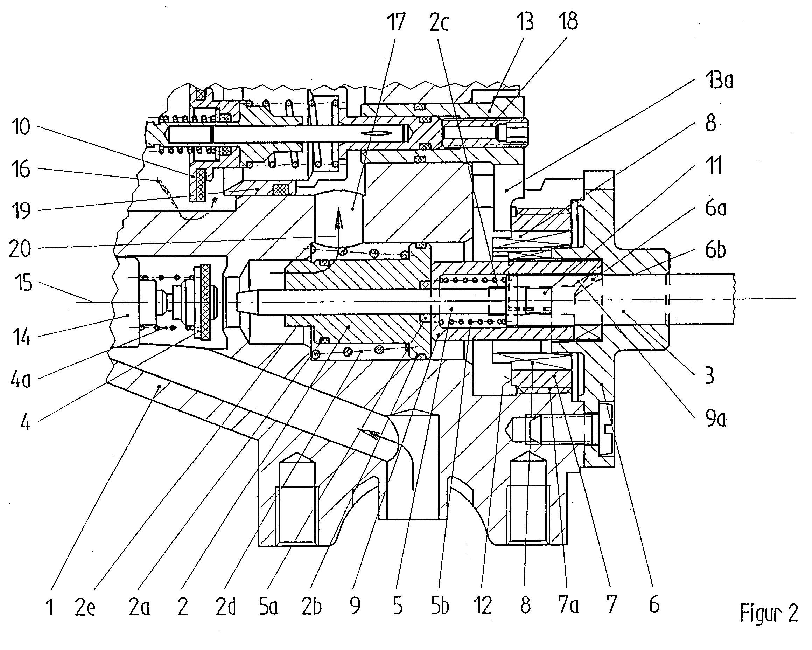

- Fig. 2: einen Schnitt nach Fig. 1 in geöffneter Ventilstellung,

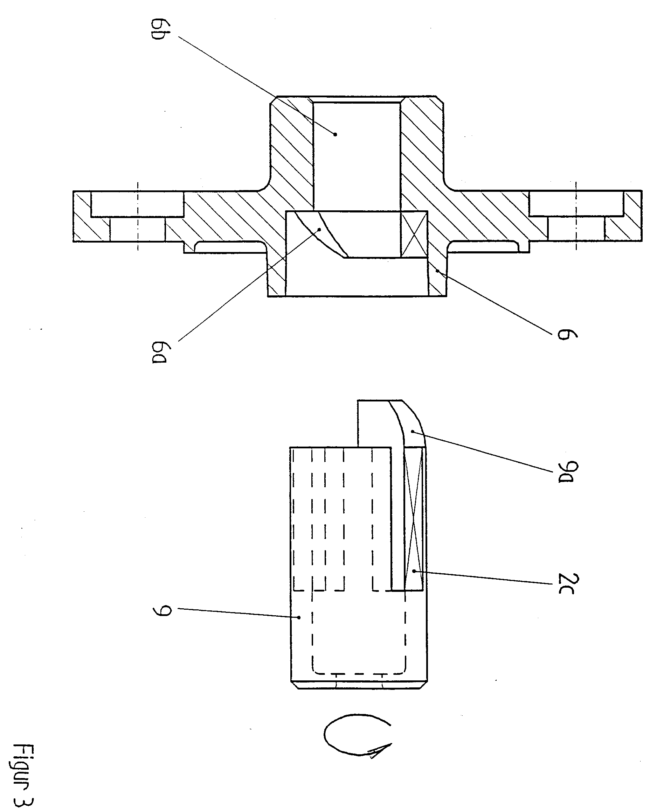

- Fig. 3: eine Darstellung der Hubübertragungsteile.

Ein Gehäuse 1 weist einen vorderen Frontflansch 6 mit einer Steigungskurve 6a und eine Führungsbohrung 6b auf, in der ein, insbesondere von Hand verstellbares Antriebsteil in Form einer Stellspindel 3, drehbar gelagert ist. Die wellenartige Stellspindel 3 ragt mit einem Stößel 5 als Verlängerung tief in das Gehäuse 1 hinein, wobei auf dem Stößel 5 ein Stellglied 2 und ein Kurventeil 9 gelagert ist. Das Stellglied 2 mit den abdichtenden O-Ringen 2a und 2b ist ein Absperrorgan und kann als Ventilkolben bezeichnet werden. Die Stellspindel 3 ist in Achsrichtung beweglich und bewegt damit den Stößel 5, der die Absperrscheibe einer thermoelektrischen Zündsicherung 4 von ihrem Sitz gegen den Druck einer Schraubenfeder 4a abhebt. Stellspindel 3, Stößel 5 und thermoelektr. Zündsicherung 4 als auch Stellglied 2 und Kurventeil 9 liegen zueinander koaxial auf der Hahnachse 15. Die Stellspindel 3 trägt außerhalb des Gehäuses 1 einen nicht dargestellten Handgriff, mit der die Stellspindel 3 sowohl eindrückbar als auch verdrehbar ist. Ein Mitnahmestift 11 ist fest mit der Stellspindel 3 verbunden, welcher beidseitig mit seinen Enden über den äußeren Wellendurchmesser der Stellspindel 3 hinausragt. An den beiden herausragenden Enden des Mitnahmestiftes 11 liegen Vorsprünge 2c des Kurventeiles 9 an, so daß bei Drehung des Stellspindels 3 das Kurventeil 9 mitgedreht wird.

An dem Kurventeil 9 ist in koaxialer Gegenlage zur Steigungskurve 6a des Frontflansches 6 eine zweite Steigungskurve 9a vorhanden, die bei Drehung der Stellspindel 3 einen axialen Hub des Stellgliedes 2 zur Öffnung des Durchflusses zu einem Steuerventil 16 zuläßt. Das Stellglied 2, welches dem Kurventeil 9 koaxial vorgelagert ist, wird dabei durch eine Druckfeder 2d, die sich einerseits im Gehäuse 1 und andererseits am Ende des Stellgliedes 2 abstützt, axial so bewegt, wie es die beiden gegeneinanderliegenden Steigungskurven 6a und 9a zulassen. Um den nötigen Durchfluß zum Steuerventil 16 über die Versorgungsbohrung 17 sicherzustellen, ist das Stellglied 2 auf der Durchflußversorgungsseite mit einem 3-Kant 2e versehen.

Das Stellglied 2 führt nur zu den Stellungen vollständig geöffnet oder vollständig geschlossen, wobei in der Offenstellung über das Äußere des Stellgliedes 2 und die Bohrung 17 im Gehäuse 1 das Gas von der thermoelektrischen Zündsicherung 4 zum Steuerventil 16 freien Zugang hat.

Nahe der beidseitigen Enden des Mitnehmerstiftes 11 ist um die Stellspindel 3 koaxial ein Gewindeteil 7 drehbar gelagert, das ringförmig ausgeführt ist und ein Außengewinde 7a aufweist, das in einem Innengewinde der Innenwandung des Gehäuses 1 greift.

Das Gewindeteil 7 weist an der Ringinnenseite achsparallel Nuten 8 auf, in denen die beiden Enden des Mitnehmerstiftes 11 greifen. Hierdurch wird bei einem Drehen der Stellspindel 3, das Gewindeteil 7 mit verdreht und aufgrund des Gewindes 7a in Achsrichtung verschoben. Stellspindel 3, Gewindestift 7 und Gewinde 7a bilden damit ein Schraubengetriebe, wobei ein Verdrehen der Stellspindel 3 zu einem Verdrehen und gleichzeitigen axialen Verschieben des Gewindeteiles 7, führt und dadurch über die Übertragungsteile 13, 13a, 18, 19 eine Verstellung des Öffnungsgrades des Ventilstellgliedes 10 am Steuerventil 16 ermöglicht.

## Patentansprüche

1. Vorrichtung zum Steuern der Gaszufuhr einer Gasverbrauchseinrichtung, insbesondere eines Gasherdes, mit zwei in der Vorrichtung in Strömungsrichtung hintereinander in der Leitung angeordneten Absperrorganen (2, 16), von denen eines (2) als Absperrvorrichtung die Gaszufuhr nur absperrt oder vollständig freigibt und das andere als Steuervorrichtung die Durchflußmenge bestimmt, wobei die Ventilstellglieder (2, 10) beider Absperrorgane durch eine gemeinsame Stellspindel (3) betätigt werden und das Ventilstellglied (2) der Absperrvorrichtung koaxial zur Spindelachse und das andere Ventilstellglied (10) der Steuervorrichtung (16) außerhalb der Spindelachse liegt, **dadurch gekennzeichnet,** daß die Stellspindel (3) über mindestens eine Steuerkurve (6a) das Ventilstellglied (2) der Absperrvorrichtung axial bewegt.

2. Vorrichtung nach Anspruch 1, **dadurch gekennzeichnet,** daß die Stellspindel (3) mindestens einen seitlich vorstehenden Mitnehmer (11) aufweist, der am Gewindeteil (7) und gleichzeitig am Kurventeil (9) der Absperrvorrichtung angreift.

3. Vorrichtung nach Anspruch 1 oder 2, **dadurch gekennzeichnet,** daß die Achsen (15) der Absperrvorrichtung (2, 9) des Gewindeteils 7, eines thermoelektrisch gesteuerten Sicherheitsventils (4) und der Stellspindel (3) koaxial verlaufen.

4. Vorrichtung nach einem der vorherigen Ansprüche, **dadurch gekennzeichnet,** daß durch Drehen der Stellspindel (3) das Gewindeteil 7 und das Ventilstellglied (2, 9) zusammen axial hubbewegbar sind.

5. Vorrichtung nach einem der vorherigen Ansprüche, **dadurch gekennzeichnet,** daß die axiale Bewegung des Gewindeteils (7) und des Ventilstellglieds (2, 9) bei gleicher Drehbewegung der Stellspindel unterschiedlich groß ist.

6. Vorrichtung nach einem der vorherigen Ansprüche, **dadurch gekennzeichnet,** daß die axiale Bewegung des Ventilstellgliedes (2, 9) nur bei der Öffnung des Gasdurchflusses von einer Druckfeder (2d) unterstützt wird.

7. Vorrichtung nach einem der vorherigen Ansprüche, **dadurch gekennzeichnet,** daß die gesamte axiale Hubbewegung des Ventilstellgliedes (2, 9) einen maximalen Drehwinkel von 90 der Stellspindel benötigt.

8. Vorrichtung nach einem der vorherigen Ansprüche, **dadurch gekennzeichnet,** daß die Steuerkurve (6a) und das Kurrenteil (9) ein Schraubengetriebe bilden.
